# EUROPEAN PATENT APPLICATION

(11) **EP 3 216 582 A1**
(43) Date of publication of application: **13.09.2017**
(21) Application number: 17159442.7
(22) Date of filing: 06.03.2017
(51) Int. Cl.: B29C 47/00, B29C 47/06, B29C 70/16, F16L 11/08

(54) **FLEXIBLE DOUBLE-LAYER HOSE STRUCTURE, MADE OF PLASTICS MATERIAL, REINFORCED WITH METALLIC THREAD, AND METHOD FOR MAKING IT**

(30) Priority: 08.03.2016 IT UA20161458
(71) Applicant: Merlett Tecnoplastic S.p.A., 21020 Daverio (VA) (IT)
(72) Inventor: TAMBORINI, Marco, 21020 Daverio (VA) (IT)
(74) Representative: Rastelli, Franco

(57) **Abstract**

A flexible tube or hose structure (1), in particular for conveying abrasive foodstuffs, such as grains, having simultaneously properties of high resistance to abrasion, non-toxicity according to the EU 10/2011 regulation and subsequent updates, and a surface resistance of less than 10⁹ ohm according to the CEI EN 61340-2-3 standard.

## Description

### BACKGROUND OF THE INVENTION

The present invention, according to a first aspect thereof, relates to a tube structure made of reinforced plastics material, in particular and preferably, but not limitedly thereto, a double-layer polyurethane, reinforced with metal thread.

According to a second aspect thereof, the invention relates to a method for manufacturing the flexible tube or hose structure.

Flexible tubes made of PVC combined with polyurethane, with metal thread reinforcement, which are able to guarantee high standards in terms of resistance to abrasion by the substances conveyed therein, in particular edible granular materials, are already known and commercially widespread.

Even though in the past it was only necessary to meet the aforementioned requirement of resistance to abrasion, currently there is a much felt need for flexible tubes that, in addition to having the desired resistance to abrasion, will present further important characteristics, such as a non-toxicity that meets the European and international standards currently in force, as well as the capacity to dissipate the surface currents that tend to form during passage of the substances conveyed, for example grains or dry foodstuffs.

To obtain the aforementioned characteristics, manufacturers of raw materials developed for these tubes, namely polyurethane, have developed various compounds.

However, so far none of these, to the knowledge of the present Applicant, has been able to combine in a single product, i.e., the tube, the aforesaid three basic characteristics required by the market, i.e., the high resistance to abrasion, a non-toxicity according to the EU 10/2011 regulation and subsequent updates, and antistatic properties or a surface resistance of less than 10⁹ ohm according to the CEI EN 61340-2-3 standard.

### SUMMARY OF THE INVENTION

The aim of the present invention is precisely to provide a reinforced flexible tube or hose structure made of plastic material, preferably polyurethane, that presents all the properties listed above.

Within the scope of the aforementioned aim, a main object of the present invention is to provide a flexible tube structure that can be produced at a competitive cost using simple methods and already existing equipment.

A further object of the present invention is to provide a flexible tube structure of the type referred to that can be easily and rapidly connected to ground to dissipate all the electrostatic charges generated therein.

A further object of the present invention is to provide a flexible tube structure of the type referred to that can be connected in an extremely simple and fast way to any desired type of apparatus, in particular to machines for conveying abrasive foodstuffs such as grains.

A further object of the present invention is to provide a flexible tube structure of the type referred to that, in addition to presenting good characteristics of flexibility, is at the same time extremely robust and operatively reliable.

Yet a further object of the present invention is to provide a simple, effective, and inexpensive method for manufacturing the flexible tube structure according to the invention.

According to one aspect of the present invention, the aim and objects mentioned above, as well as other objects that will emerge more clearly hereinafter, are achieved by a flexible tube structure made of a double-layer plastic material, reinforced with metal thread in particular for conveying granular abrasive foodstuffs, characterized in that said flexible tube structure presents good properties of resistance to abrasion, non-toxicity according to the EU 10/2011 regulation and subsequent updates, and a surface resistance according to the CEI EN 61340-2-3 standard.

Further characteristics and advantages of the flexible tube structure according to the present invention are defined in the dependent claims.

The aim and objects mentioned above, as well as yet further objects, which will emerge more clearly hereinafter, are likewise achieved by a method for manufacturing the flexible tube structure made of double-layer plastic material, in particular polyurethane, reinforced with metal thread, according to the invention, the method being characterized in that it comprises at least the steps of:
a) providing spindle means that can be rotatably and/or slidably actuated by respective actuation means;
b) providing first drawing means, equipped with a first extrusion head, in the proximity of said spindle means;
c) providing second drawing means, equipped with a second extrusion head, in the proximity of said spindle means;
d) providing a unit for supplying a metal thread;
e) rotatably and/or slidably actuating said spindle means;
f) extruding on said spindle means a first strip by means of said first extrusion head; and
g) extruding on said first strip a second strip by means of said second extrusion head, and at the same time setting between said first and second strips said metal thread.

### BRIEF DESCRIPTION OF THE DRAWINGS

Further characteristics and advantages of the flexible tube structure made of double-layer plastic material, reinforced with metal thread, according to the present invention, will emerge more clearly hereinafter from the following detailed description of a currently preferred embodiment thereof, illustrated by way of indicative, but non-limiting, example in the annexed schematic drawings, wherein:
FIG. 1 is a partially cutaway front view of the reinforced flexible tube structure according to the present invention;
FIG. 1A is a detailed view of FIG. 1, basically corresponding to the encircled area A;
FIG. 2 is a perspective view of a length of the flexible tube structure according to the present invention in a completely formed condition;
FIG. 3 illustrates the flexible tube grounded for example via an earthing bracket S to dissipate to ground any possible electrostatic charges generated by the granular material conveyed in the flexible tube; and
FIG. 4 is a schematic view of a possible apparatus for implementing a method for manufacturing the flexible tube structure according to the invention.

### DESCRIPTION OF THE PREFERRED EMBODIMENTS

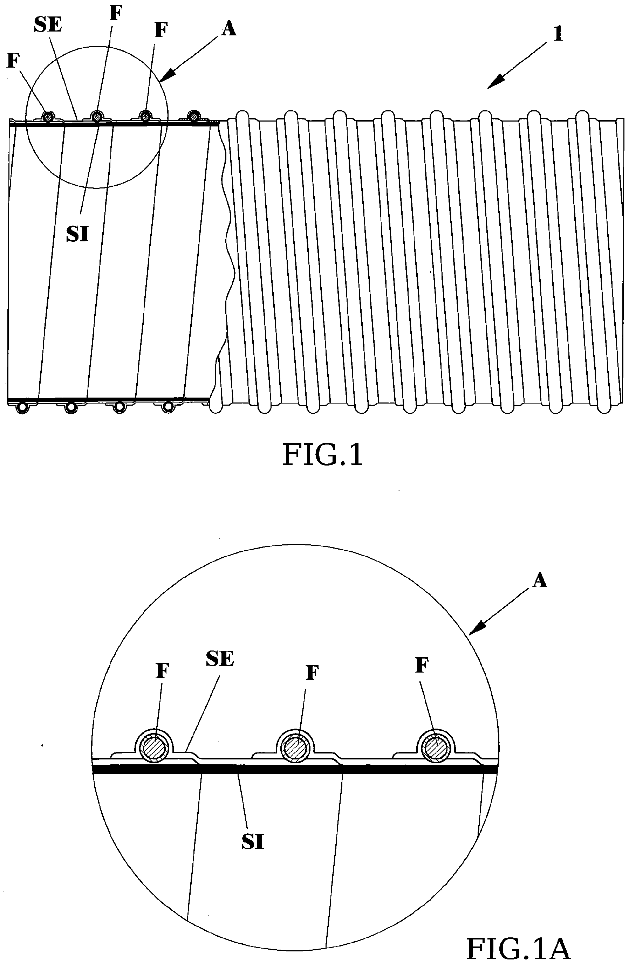

With reference now to the aforementioned drawings, FIG. 1 represents, in partially cutaway view, a length of flexible tube according to the present invention, designated as a whole by the reference number 1.

As has already been mentioned, the invention has been conceived to meet the current commercial need of providing a flexible tube 1 that will be able to guarantee not only high standards of resistance of the inside of the tube in regard to abrasion due to the pressurized substances (not shown), which are in general granular, that are conveyed thereby, but also additional important characteristics, amongst which absolute non-toxicity for the substances conveyed and the capacity to dissipate the surface currents that come to form during conveyance of the aforesaid substances.

According to the present invention, the Applicant has been able to combine in a single flexible tube the aforesaid high resistance to abrasion, absolute non-toxicity according to the EU 10/2011 regulation and subsequent updates, as well as antistaticity or surface resistance of less than 10⁹ ohm according to the CEI EN 61340-2-3 standard, the latter characteristic enabling dissipation to ground of any electrostatic charge generated by passage, for example, of the aforementioned granular products through the tube.

According to a preferred embodiment of the present invention, the aforementioned three characteristics have been achieved in a single flexible tube produced from a co-extruded structure, in which two different types of plastic material, in particular polyurethane (PU), have been used, i.e. a coating layer SE (see, for example, FIG. 1 and FIG. 1A) made of polyurethane (PU)/polyester on the outer side of the tube 1, and an inner coating layer SI made of non-toxic polyurethane.

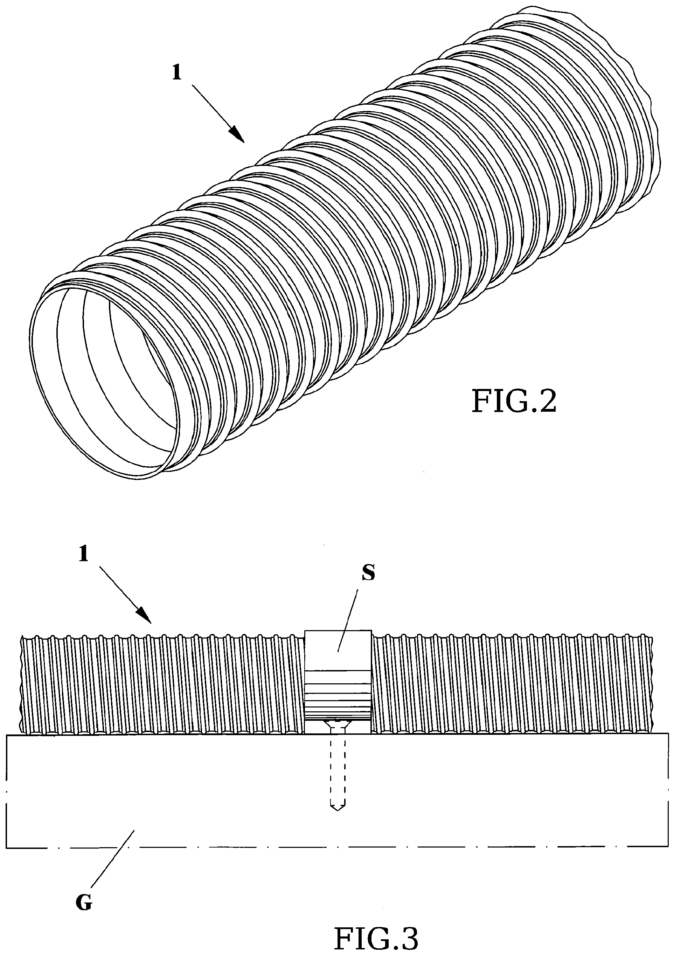

The layer of antistatic polyurethane advantageously presents a resistance of less than 10⁹ ohm to enable dissipation to ground, for example also thanks to the aforementioned bracket S (FIG. 3), of any electrostatic charge.

Of course, although reference is made herein to polyurethane as the preferred plastic material of the aforementioned layer, said material may be replaced by any plastic material having the parameters indicated.

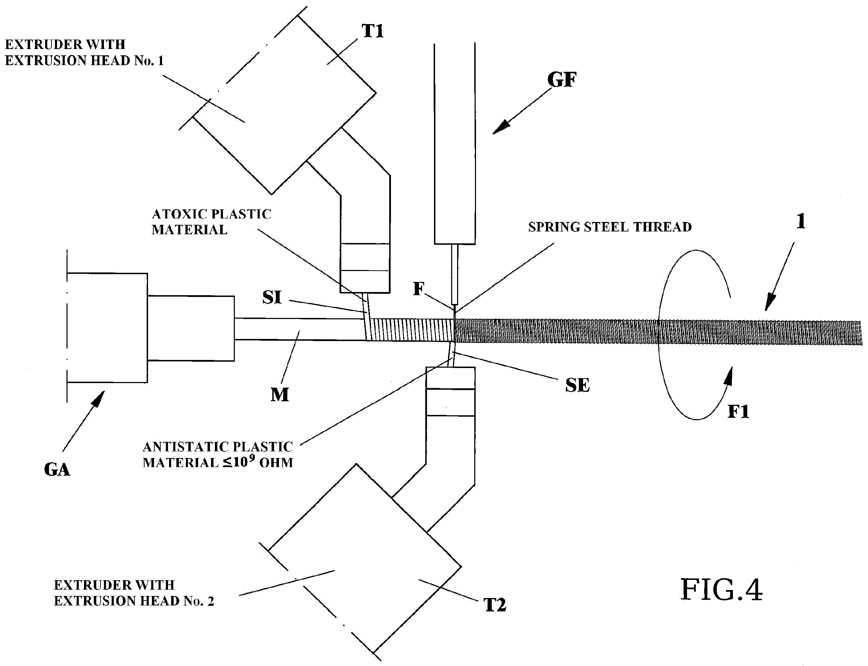

With reference now to FIG. 4, represented therein is a principle schematic view of a possible plant for implementing the method for manufacturing the flexible tube 1 according to the present invention.

As may be noted, said plant comprises a horizontal elongated spindle M rotatably and/or slidably actuated by an actuation assembly GA.

In the proximity of the elongated spindle M, in the top part of FIG. 4, a first extruder with a respective extrusion head T1 is shown, designed to extrude the aforementioned strip SE of non-toxic plastic material (preferably non-toxic polyurethane-polyester).

In the top part of FIG. 4 a further unit is also provided, designated as a whole by GF, for supplying the reinforcement thread, for example made of copper-plated spring steel F.

The bottom part of FIG. 4 shows a second extruder with extrusion head T2, for extrusion of the aforesaid outer strip SE made of antistatic plastic material, for example, by way of indicative, but non-limiting, example, antistatic polyurethane-polyester, with a resistance advantageously of less than 10⁹ ohm.

Thus, as a result of rotation, for example in a counterclockwise direction, as indicated by the arrow F1, of the spindle M, and for example following upon appropriate translation of the spindle itself or, if so desired, of the two extruders T1 and T2, the two strips SI and SE are wound around the spindle M itself with the reinforcement thread F, for example made of copper-plated spring steel, set in between, so that the inner strip SI of non-toxic plastic material will come to constitute the inner surface of the tube 1, whereas the strip SE of antistatic plastic material will come to constitute the outer surface of the tube itself that comes to form on the spindle M.

From the foregoing, it may be noted that also the method for formation of the tube 1 according to the invention is extremely simple and can be easily implemented using commercially available extrusion/drawing assemblies so that the invention fully achieves the aim and objects pursued.

Of course, in the production of the reinforced flexible tube according to the invention, the materials used, as well as the specific dimensions, may be any according to the requirements.

In particular, although throughout the description of the invention specific reference has been made to the use of polyurethane, it will be obvious, in the light of the teachings of the invention, that said material, i.e. polyurethane, may be replaced by any other plastic material having substantially equivalent properties, according to the requirements.

## Claims

1. A reinforced flexible tube structure, in particular for conveying abrasive granular foodstuffs, **characterized in that** said flexible tube structure presents good properties of resistance to abrasion, non-toxicity according to the EU 10/2011 regulation and subsequent updates, and a surface resistance according to the CEI EN 61340-2-3 standard.

2. A flexible tube structure according to claim 1, **characterized in that** it is co-extruded from two different types of plastic material.

3. A flexible tube structure according to claim 2, **characterized in that** said plastic material is preferably polyurethane.

4. A flexible tube structure according to claims 1 to 3, **characterized in that** it comprises an extruded strip of two layers of different plastic materials, coupled together with a metal reinforcement thread set in between; said two layers comprising an inner layer of non-toxic material and an outer layer of antistatic material having an electrical resistance of less than or equal to 10⁹ ohm.

5. A flexible tube structure according to claim 4, **characterized in that** said inner layer of said non-toxic material preferably comprises non-toxic polyurethane.

6. A flexible tube structure according to claim 4, **characterized in that** said outer coating layer of antistatic material preferably comprises PU/polyester.

7. A flexible tube structure according to claim 4, **characterized in that** said metal thread is preferably a copper-plated spring steel thread.

8. A method for manufacturing a flexible tube structure according to any one of the preceding claims, **characterized in that** it comprises at least the steps of:
a) providing spindle means that can be rotatably and/or slidably actuated by respective actuation means;
b) providing first drawing means equipped with a first extrusion head, in the proximity of said spindle means;
c) providing second drawing means equipped with a second extrusion head in the proximity of said spindle means;
d) providing a unit for supplying a metal reinforcement thread;
e) rotatably and/or slidably actuating said spindle means;
f) extruding on said spindle means a first strip by means of said first extrusion head; and
g) extruding on said first strip a second strip by means of said second extrusion head, and at the same time setting said metal reinforcement thread between said first and second strips.

9. A method according to claim 8, **characterized in that**: said second layer preferably comprises PU/polyester; said first layer preferably comprises non-toxic PU; and said metal thread preferably comprises copper-plated spring steel.
